# EUROPEAN PATENT SPECIFICATION

(11) **EP 4 401 953 B1**
(45) Date of publication and mention of the grant of the patent: **05.11.2025**
(21) Application number: 22782590.8
(22) Date of filing: 16.09.2022
(51) Int. Cl.: B29C 70/42, B63B 5/24, B29C 70/54, B29C 33/74, B63B 73/70, B63B 73/74, G01D 5/12, B29C 37/00, B29C 33/70

(54) **APPARATUS FOR MOLDING A SHELL ELEMENT MADE OF COMPOSITE MATERIAL, PARTICULARLY A HULL OF A BOAT, AND METHOD THEREOF**
VORRICHTUNG ZUM FORMEN EINES SCHALENELEMENTS AUS VERBUNDMATERIAL, INSBESONDERE EINES SCHIFFSRUMPFES, UND VERFAHREN DAFÜR
APPAREIL DE MOULAGE D'UN ÉLÉMENT DE COQUE EN MATÉRIAU COMPOSITE, EN PARTICULIER UNE COQUE DE BATEAU, ET PROCÉDÉ ASSOCIÉ

(30) Priority: 17.09.2021 IT 202100023918
(43) Date of publication of application: 24.07.2024
(73) Proprietor: AMER YACHTS S.p.A., 18038 Sanremo (Imperia) (IT)
(72) Inventor: AMERIO, Barbara, 18038 SANREMO (Imperia) (IT)
(74) Representative: Verdecchia, Valerio
(86) International application number: PCT/IB2022/058752
(87) International publication number: WO 2023/042135

(56) References cited:
- WO-A2-2019/122840
- DE-A1- 102017 107 908
- KR-A- 20160 067 690
- US-A1- 2005 079 241
- US-A1- 2010 068 065
- US-A1- 2012 244 006

## Description

### Technical field

The present invention is, in general, in the field of molding shell components for use in the nautical industry, and in particular in the field of molding hulls or keels made of a composite material for boats, whether sailing or motor boats, and particularly for large boats.

### Prior art

Molds are generally known to be used for the production of shell elements, particularly for the production of hulls or keels, particularly those made of composite materials. Generally, in the process of manufacturing a hull made of composite material for a boat, a plurality of mold parts is coupled to make a molding cavity that defines the shape of the hull. Layers of reinforcement material, such as, for example, fiber, or fibrous material, are then arranged on the surface of the molding cavity, called the molding surface. Said materials are covered with vacuum bags. Subsequently, in the space between the vacuum bag and the molding surface, the die is injected, or generally a molten thermosetting material, such as, for example, a thermosetting resin. Finally, the assembly undergoes a polymerization process, advantageously in an autoclave. In the nautical field, however, the size of shell elements made in molds in such a manner is considerable, and may reach and exceed 300 square meters. As a result, it is very important to be able to check the structural stability of the mold, or the mold parts that make up the mold, and to verify that the shape of the mold remains the same over time, so that the molding process takes place as uniformly as possible during the production of different parts. Moreover, when the mold or mold parts are not in use, they are generally stored in the open or otherwise outdoors, precisely because of the large size typical in the shipbuilding industry. As a result, during times of non-use or preparation, molds or mold parts may be affected by weathering and/or changes in temperature (with temperature changes of up to 40°C over the year), pressure and humidity, risking inadvertent strain. It should further be taken into account that said molds are a valuable capital asset in the shipbuilding industry. KR20160067690A, DE102017107908A1 and US2005/079241A1 each disclose an apparatus for molding a shell hull, made of composite material as well as a method for monitoring a mold for molding a shell hull.

### Summary of the invention

The object of the present invention is to overcome the problems described, and to provide a solution to the drawbacks of the prior art.

A further object of the present invention is to determine the best environmental and stress conditions for manufacturing a shell element by molding.

Finally, a further object of the present invention is to make the process of manufacturing shell elements made of composite material by means of molding more economical.

The aforesaid and other objects and advantages are obtained with a molding apparatus having the features defined in claim 1, as well as a related monitoring method having the features defined in claim 9 and a manufacturing method having the features defined in claim 12.

Advantageous embodiments of the invention are specified in the dependent claims, the content of which is to be understood as an integral part of the description that follows.

In summary, the invention is based on the idea of providing an apparatus for molding a shell hull, made of composite material, of a boat, the apparatus comprising:
- a first mold part and a second mold part, wherein said first mold part and said second mold part each have a respective molding surface, said first mold part and said second mold part being suitable to be coupled together to define a concave molding cavity for molding a shell hull made of composite material, the molding cavity being delimited on two opposite sides by the respective molding surfaces of said first mold part and said second mold part and extending longitudinally between a stern end and a bow end;
- a humidity sensor suitable for detecting humidity at the first part of the mold and/or the second part of the mold;
- a plurality of sensor means, arranged in a plurality of respective detection positions on a detection surface of at least one of said first mold part and said second mold part, and arranged directly in contact with at least one of said first mold part and said second mold part, the detection surface being arranged opposite to the molding surface of said mold part; wherein the sensor means are adapted to produce a plurality of signals representative of respective strains of the detection surface in directions substantially perpendicular to the detection surface at the respective detection positions.

By virtue of the arrangement of the sensor means, it is possible to detect any strains of the detection surface, and thus of the first part of the mold and/or the second part of the mold, in directions substantially perpendicular to the detection surface at the detection positions where the sensor means are arranged, and, if necessary, to prepare corrective or repairing actions for said strains.

### Brief description of the drawings

The features and advantages of the present invention will be clarified by the detailed description that follows, given purely by way of non-limiting example and with reference to the attached drawings, in which:
Fig. 1 is a perspective view of an apparatus according to an embodiment of the invention;
Fig. 2 is an exploded view of the apparatus shown in Fig. 1; and
Fig. 3 is a lateral view of a first mold part of an apparatus according to a further embodiment of the invention.

### Detailed description

Before describing in detail a plurality of purely exemplifying embodiments of the invention, it should be clarified that the invention is not limited in its application to the construction details and to the configuration of the components presented in the following description or illustrated in the drawings. The invention may assume other embodiments and be implemented or constructed in practice in different ways. It should also be understood that the phraseology and terminology have a descriptive purpose and should not be construed as limiting. The use of "include" and "comprise" and the variations thereof are intended to cover the elements set out below and their equivalents, possibly also as additional elements and the equivalents thereof.

Terms such as "stem", "bow", "midship section", "starboard", "port", and "longitudinally", in the context of the present description and the attached claims are to be interpreted within the normal meaning they have in the nautical industry.

In the context of this description and the attached claims, "shell element" means a structural element having a thickness much smaller than its width and height, such as, for example, a hull, a keel, or part thereof, or a panel.

In reference to the figures, the apparatus according to the invention is indicated generally with 10. The apparatus 10 is suitable for use in molding a shell element made of composite material, particularly for molding a hull or a keel of a boat or vessel.

In addition, or as an alternative, the apparatus may be used for molding a shell hull made of biocomposite material.

The term biocomposite material refers to a special type of composite material in which a matrix is reinforced with one or more types of fibers of plant origin, for example a resin matrix reinforced with basaltic fibers or bamboo fibers, in such a way as to obtain a material with superior mechanical properties with respect to the source materials taken individually, and one that is more biodegradable, or more easily recyclable than a traditional composite material.

The apparatus 10 essentially comprises a first mold part 12, a second mold part 14, a plurality of sensor means 16 and a humidity sensor 17.

The first mold part 12 and the second mold part 14 are formed as generally thin bodies, for example of a maximum thickness of about 1 cm. In a preferred embodiment, the first mold part 12 and the second mold part 14 are essentially similar and symmetrical in shape. The first mold part 12 and the second mold part 14 each have a respective molding surface, specifically they have a first molding surface 12a and a second molding surface 14a. In essence, the first mold part 12 and the second mold part 14 have such a shape, or are adapted, to be coupled so as to integrally define a molding cavity 18. The molding cavity 18 is essentially concave, extending longitudinally, or in a longitudinal direction x, between a stern end 20 and a bow end 22, and is delimited on two opposite sides by the first molding surface 12a and the second molding surface 14a.

As mentioned above, the apparatus 10 further comprises a plurality of sensor means 16. The sensor means 16 are arranged on a detection surface 24 that extends over at least one of the first mold part 12 and the second mold part 14.

Preferably, the sensor means 16 may be arranged in contact, or directly in contact with at least one of the first mold part 12 and the second mold part 14.

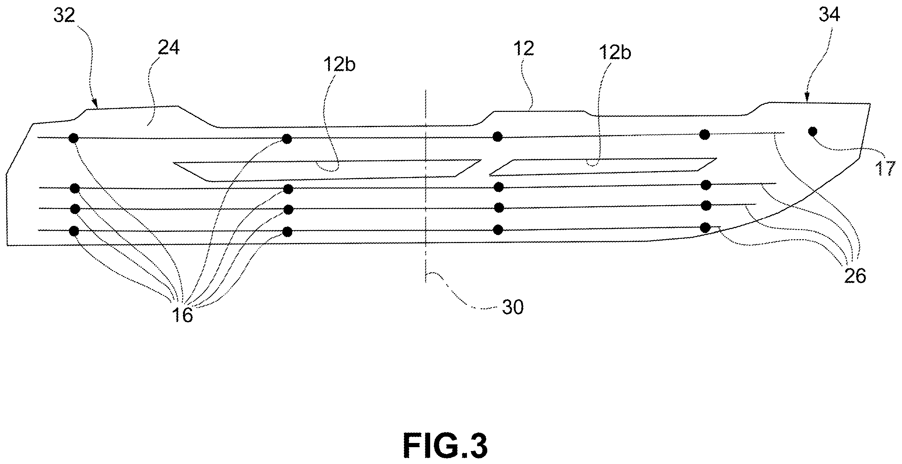

More preferably, the sensor means 16 are arranged on both the first mold part 12 and the second mold part 14, or the detection surface 24 extends partly on the first mold part 12 and partly on the second mold part 14. Hereinafter, only the embodiment of the invention for which the sensor means are arranged exclusively on the first mold part 12, or in which the detection surface 24 extends entirely over the first mold part 12, as also shown in Fig. 3, will be described, with the understanding that the invention further comprises embodiments in which the sensor means 16 are arranged at least partially, or only, on the second mold part 14. In particular, the detection surface 24 is arranged opposite to the molding surface 12a (or 14a) of the first mold part 12 (or the second mold part 14). Essentially, the detection surface 24 is arranged externally on the first mold part 12 (and/or on the second mold part 14).

The sensor means 16 are suitable for detecting the strain of the first mold part 12 (and/or the second mold part 14), and in particular for detecting, measuring, and/or determining the strain of the detection surface 24 along the direction substantially perpendicular to said detection surface 24 in the detection position of each sensor means 16, or are adapted to generate a respective plurality of signals representative of the strain of the first mold part 12 and/or the second mold part along directions substantially perpendicular to the detection surface 24 in the respective detection positions.

With the object of measuring respective strains of the detection surface 24, the sensor means 16 may be provided, for example, in the form of strain gauges and/or piezoelectric transducers arranged in contact, or directly in contact, with the first mold part 12 and/or the second mold part 14.

In this way, the apparatus 10 is able to produce a plurality of signals, in a plurality of detection positions, through the relevant plurality of sensor means 16, these signals being representative of the strain of the detection surface 24 of the first mold part 12 (and/or the second mold part 14) in the direction essentially orthogonal to said detection surface 24 at the point where the sensor means 16 is positioned, or at the respective detection position.

The detection signals representative of the strain of the detection surface that are produced by the sensor means 16 may then be transmitted to an electronic control unit 19 (not shown), and even more preferably be processed thereby, to determine if, where, and when the first mold part 12 and/or the second mold part 14 have undergone significant structural strains and possibly to determine or suggest to an operator the need for maintenance work aimed at repairing the first mold part 12 and/or the second mold part 14.

As is visible in the figures, the sensor means 16 may be, for example, distributed along rows 26, each row 26 comprising part of the plurality of sensor means 16. The different rows 16 may be arranged, for example, so as to extend longitudinally between the stern end 20 and the bow end 22, or so as to be substantially parallel and spaced apart, or arranged at different "heights," or at different positions in a plane perpendicular to the longitudinal direction x. Preferably, the sensor means 16 of different rows 26 are arranged in substantially corresponding longitudinal positions, as clearly visible in Fig. 3, or the sensor means 16 of different rows 26 are grouped together in groups that are located at a common longitudinal position.

Preferably, the sensor means 16 of each row 26 are electrically connected in series with each other for their power supply.

In addition, the sensor means 16 of each row 26 may be electrically connected in series with each other to transmit strain data to the electronic control unit 19.

The sensor means 16 may be glued to the detection surface 24, or they may each be fixed in their respective detection position by conventional mechanical fastening means.

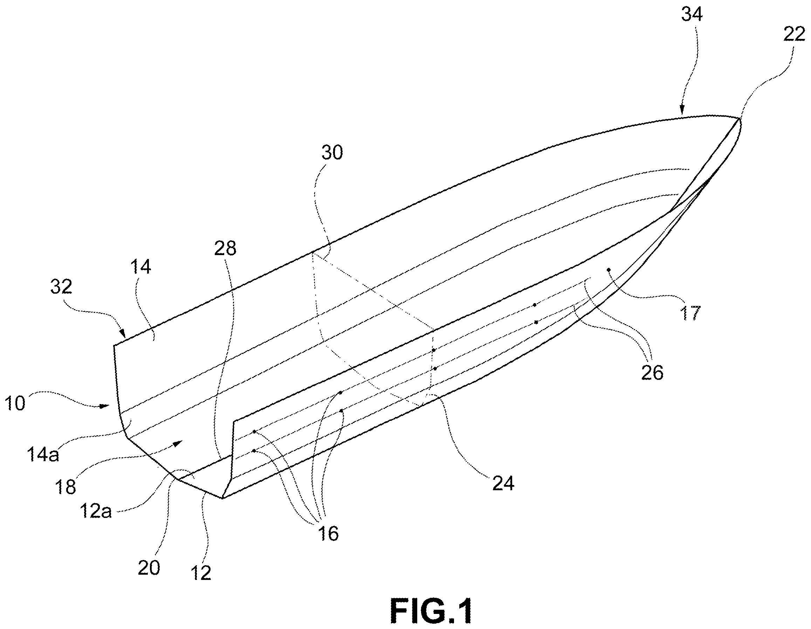

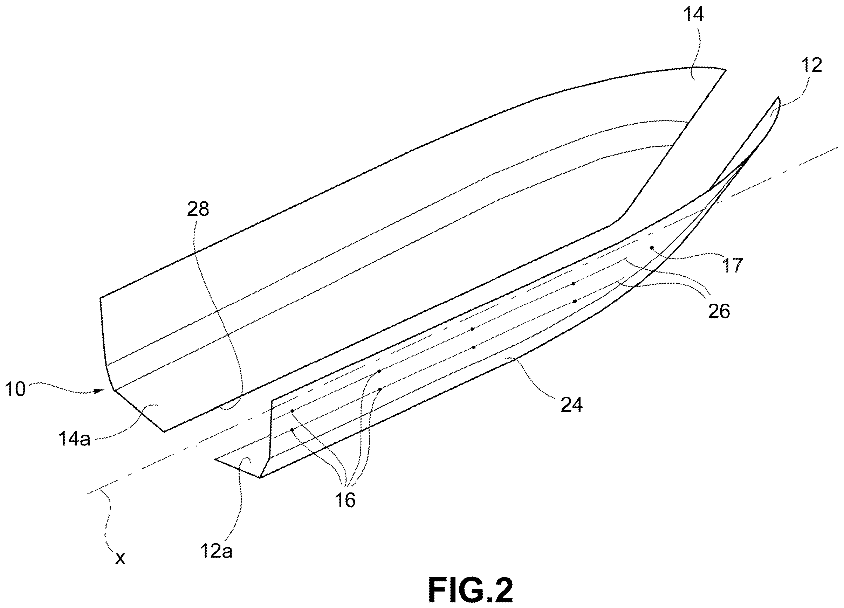

In a preferred embodiment of the invention, the sensor means 16 are arranged on the detection surface 24 so that at least part of the sensor means 16 is arranged on either side with respect to a keel centerline 28 (of the shell member, or the hull, to be molded), or with respect to a diametral plane or with respect to a centerboard plane of the hull and/or the first mold part 12 and/or the second mold part 14. Specifically, in the embodiment in which the first mold part 12 and the second mold part 14 each delineate an exact half of the hull or shell element to be molded, the keel centerline 28 will correspond to the line of union between the first mold part 12 and the second mold part 14, or the line where the two mold parts touch and connect to form the molding cavity 18, as shown in Fig. 1 and Fig. 2. Specifically, in a preferable embodiment, the sensor means 16 may be arranged on the detection surface 24 so that:
- at least part of the plurality of sensor means 16 is arranged along the keel centerline 28, or lying in the diametral or centerboard plane, of the first mold part 12 or the second mold part 14; and
- at least part of the plurality of sensor means 16 is arranged on a starboard side, or a right side, with respect to the keel centerline 28, or with respect to the diametral or centerboard plane, of the first mold part 12 or the second mold part 14; and
- at least part of the plurality of sensor means 16 is arranged on a port side with respect to the keel centerline 28, or with respect to the diametral or centerboard plane, of the first mold part 12 or the second mold part 14, the port side being arranged opposite the starboard side of the first mold part 12 or the second mold part 14 with respect to the keel centerline 28, or with respect to the diametral or centerboard plane.

In a preferred embodiment of the invention, the sensor means 16 are arranged on the detection surface 24 in such a way that at least part of the sensor means 16 is arranged on either side with respect to a plane on which a midship section 30 lies, or a section of maximum relative size, or with respect to a plane perpendicular to the longitudinal direction x of the hull and/or of the first mold part 12 and/or of the second mold part 14. Essentially, therefore, in this embodiment the sensor means 16 are arranged partly on a bow side 34 and partly on a stern side 32. Specifically, the sensor means 16 may be arranged on the detection surface 24 so that:
- at least part of the plurality of sensor means 16 is arranged at the midship section 30 of the first mold part 12 or the second mold part 14; and
- at least part of the plurality of sensor means 16 is arranged on a stern side 32 with respect to the midship section 30 of the first mold part 12 or of the second mold part 14; and
- at least part of the plurality of sensor means 16 is arranged on a bow side 34 with respect to the midship section 30 of the first mold part 12 or the second mold part 14, the stern side 32 being arranged opposite the bow side 34 of the first mold part 12 or the second mold part 14 with respect to the midship section 30.

Clearly, as is clear to the person skilled in the art, the bow side 34 and the stern side 32 are arranged at the bow end 22 and the stern end 20, respectively.

As is clear to the person skilled in the art, each of said sensor means 16, being adapted to generate a signal representative of the strain of the detection surface 24 (of the first mold part 12 and/or the second mold part 14) in a direction perpendicular to said detection surface 24, is parameterized with respect to the thickness of the mold part to which it is fixed, or the first mold part 12 or the second mold part 14, at the point where it is mounted, or at the detection position.

The apparatus 10 further comprises a humidity sensor 17 suitable for detecting the humidity in the environment or in the air at the first mold part 12 and/or the second mold part 14.

Preferably, the humidity sensor 17 transmits the result of this detection to the electronic control unit 19.

In a preferred embodiment, the apparatus 10 may further comprise a temperature sensor adapted to detect the ambient air temperature at the first mold part 12 and/or the second mold part 14, or detecting the temperature of the first mold part 12 and/or the second mold part 14, and transmitting the result of said detection to the electronic control unit. It is also possible for the apparatus 10 to comprise one or more environmental sensors each adapted to measure at least temperature and humidity, and/or additional useful environmental parameters.

Alternatively, the sensor means 16 may also be arranged in "scattered," or cloud-like configurations, or in detection positions of the detection surface 24 that do not necessarily follow a fixed and repeated geometric pattern.

In an embodiment of the invention, the sensor means 16 are wireless sensor means 16, whereby they may be battery-powered and/or may transmit and receive the detection data via a wireless communication means.

In the embodiment of Fig. 3, in particular, a first mold part 12 is shown having a complex shape and having a plurality of openings 12b, shaped for the arrangement of any additional structural elements or windows or glass. By way of example, on said first mold part 12, four rows 26 of sensor means 16 are arranged, each row 26 comprising four different sensor means 16.

According to a second aspect of the invention, a method for monitoring a mold for molding a shell hull, made of composite material, of a boat also forms part of the invention, comprising the steps of:
a) arranging an apparatus 10 according to the first aspect of the invention;
b) generating, at a plurality of detection positions, by means of said sensor means 16, a plurality of signals representative of respective strains of the detection surface 24 of the first mold part 12 and/or the second mold part 14, in directions substantially perpendicular to the detection surface 24.

Preferably, the monitoring method of a mold also comprises the steps of:
c) transmitting said plurality of signals to an electronic control unit 19;
d) processing said plurality of signals by means of said electronic control unit 19.

More preferably, depending on the outcome of what is generated in step b) and/or the processing carried out in step d), a repair action may be carried out. In fact, if the sensor means 16 detect a strain beyond a tolerance threshold at one or more sensing positions, it will be possible to repair the first mold part 12 or the second mold part 14 in a timely manner, or by applying, adding, or removing material only in the sensing positions where the sensor means 16 will have detected a strain.

The definition of the repair action, which means the definition of the amount of material to be added or removed on one or more sensing positions of the molding surface 24, may be carried out by means of the electronic control unit 19 on the basis of the representative strain signals and/or the processing thereof.

Preferably, the strains of the first mold part 12 and/or the second mold part 14 are determined automatically by the electronic control unit 19 and the repair action of the strains is automated.

The monitoring method may, preferably, be used continuously, or it may be used either during the use of the first mold part 12 and/or the second mold part 14, or when these parts are "at rest," or left unused in storage or outdoors.

According to a third aspect of the invention, a method of manufacturing a shell hull, made of composite material, of a boat also forms part of the invention, comprising the steps of:
x1) carrying out monitoring according to the method of the second aspect of the invention;
x2) arranging at least one layer of reinforcement material, or fibrous material, such as glass fiber, within said molding cavity 18; and
x3) following step x2), injecting a thermosetting resin inside said molding cavity 18 so as to fill said molding cavity 18, or so as to essentially cover the molding surface 12a and/or 14a entirely, or injecting a thermosetting resin inside a vacuum bag or curing bag arranged so as to essentially cover the molding surface 12a and/or 14a entirely.

Preferably, in the manufacturing method according to the third aspect of the invention, step b) of producing, at a plurality of detection positions, through said sensor means 16, a plurality of signals representative of respective strains of the detection surface 24 of the first mold part 12 and/or the second mold part 14, in directions substantially perpendicular to the detection surface 24, is carried out at least in part during at least one of either step x2) and step x3). Thus, in essence, preferably at least part of the detection of the monitoring method takes place during the step of arranging the reinforcement material layer and/or during the step of injecting the thermosetting resin.

Preferably, the manufacturing method according to the third aspect of the invention may also comprise the step of:
x4) following step x3), subjecting the reinforcement material layer, or fibrous material, and the thermosetting resin inside the molding cavity 18 to a vacuum bag autoclave polymerization process according to a specific pressure and temperature cycle.

In order to carry out step x4), a curing bag, or vacuum bag, is typically applied so as to fully cover the molding cavity 18 and the molding surface 12a and/or 14a of the first mold part 12 and/or the second mold part 14. The application of said curing bag, or vacuum bag, is done before step x3), or before injecting thermosetting resin inside the molding cavity 18.

Even more preferably, the manufacturing method according to the third aspect of the invention may further comprise the step of arranging a layer of waxy material on the molding surface 12a and/or 14a of the first mold part 12 and/or the second mold part 14, respectively, prior to step x2). The arrangement of said layer of waxy material facilitates the separation of the item, i.e., the shell element, from the molding surface 12a and/or 14a, the first mold part 12 and/or the second mold part 14, respectively, after the autoclave curing process.

As is evident from the foregoing detailed description, several advantages may be achieved by the apparatus according to the invention and related methods.

First, through the use of sensor means, it is possible to check in a more or less extended time interval whether the mold is straining, or whether the first mold part and/or the second mold part undergoes any strain due to stress or environmental conditions. It is possible to perform such a check either during use, or during molding, or at times when the mold is not in use, for example when the mold is stored unused in storage or outdoors.

In addition, due to the arrangement of the sensor means, the exact location of any detected strains may be accurately determined.

Finally, in this way, repair actions may be taken on the mold, which means on the first mold part and/or the second mold part. In this way. the remaining useful life of the molds is clearly extended. In fact, by being able to detect defects or strains directly on the mold, it is possible to correct these defects or strains on the mold while avoiding the more costly need to correct the defects or strains on each molded item, i.e., on each shell element, which means on each hull produced using the mold.

Ultimately, it will be possible to correlate the detections from the sensor means with those of the humidity or temperature sensors, or with additional contextual information, and with information about the quality of the resulting product, or the molded shell element, making it possible to determine which operating conditions ensure higher product quality.

Various aspects and embodiments of an apparatus according to the invention have been described. It is understood that, in a way that is in itself obvious and equivalent to what is being is claimed, each embodiment of the invention may be combined with any other embodiment of the invention, insofar as they are compatible, without thereby falling outside the scope defined by the attached claims.

Of course, the invention is not limited to the embodiments described purely by way of example, but may be varied within the scope defined by the appended claims.

## Claims

1. Apparatus (10) for molding a shell hull, made of composite material, of a boat, the apparatus (10) comprising:
- a first mold part (12) and a second mold part (14), wherein the first mold part (12) and the second mold part (14) each have a respective molding surface (12a, 14a),
the first mold part (12) and the second mold part (14) being adapted to be coupled to define jointly a concave molding cavity (18) for molding a shell hull of a boat in composite material,
the molding cavity (18) being delimited on two opposed sides by the respective molding surfaces (12a, 14a) of said first mold part (12) and of said second mold part (14), and extending longitudinally between a stern end (20) and a bow end (22);
- a plurality of sensor means (16), arranged in a respective plurality of detection positions on a detection surface (24) that extends on at least one of said first mold part (12) and said second mold part (14), and arranged directly in contact with at least one of said first mold part (12) and said second mold part (14), the detection surface (24) being arranged opposite to the molding surface (12a; 14a) of such mold part (12; 14);
wherein the sensor means (16) of the plurality of sensor means (16) are adapted to generate a plurality of signals representative of respective strains of the detection surface (24) in directions substantially perpendicular to the detection surface (24) in the respective detection positions,
**characterised by**
- a humidity sensor adapted to detect the humidity at the first mold part and/or at the second mold part.

2. The apparatus according to claim 1, wherein the sensor means (16) are distributed in rows (26) which are transversely spaced and which extend longitudinally between the stern end (20) and the bow end (22).

3. The apparatus according to claim 2, wherein sensor means (16) of different rows (26) are arranged in substantially corresponding longitudinal positions.

4. The apparatus according to claim 2 or claim 3, wherein the sensor means (16) of each row (26) are electrically connected in series with each other to supply power and/or to transmit data.

5. The apparatus according to any of the preceding claims, wherein the sensor means (16) are arranged on the detection surface (24) in such a way that:
- at least part of the plurality of sensor means (16) is arranged along a keel centerline (28) of the first mold part (12) or of the second mold part (14); and
- at least part of the plurality of sensor means (16) is arranged on a starboard side with respect to the keel centerline (28) of the first mold part (12) or of the second mold part (14); and
- at least part of the plurality of sensor means (16) is arranged on a port side with respect to the keel centerline (28) of the first mold part (12) or of the second mold part (14), the port side being arranged opposite to the starboard side of the first mold part (12) or of the second mold part (14) relative to the keel centerline (28).

6. The apparatus according to any of the preceding claims, wherein the sensor means (16) are arranged on the detection surface (24) in such a way that:
- at least part of the plurality of sensor means (16) is arranged at a midship section (30) of the first mold part (12) or of the second mold part (14); and
- at least part of the plurality of sensor means (16) is arranged on a stern side (32) with respect to the midship section (30) of the first mold part (12) or of the second mold part (14); and
- at least part of the plurality of sensor means (16) is arranged on a bow side (34) with respect to the midship section (30) of the first mold part (12) or of the second mold part (14), the stern side (32) being arranged opposite to the bow side (34) of the first mold part (12) or of the second mold part (14) relative to the midship section (30).

7. The apparatus according to any of the preceding claims, wherein the plurality of sensor means (16) is arranged in a plurality of respective detection positions on respective detection surfaces (24) of both said first mold part (12) and second mold part (14), the respective detection surface (24) of the first mold part (12) or of the second mold part (14) being arranged opposed to the molding surface (12a; 14a) of the respective mold part (12; 14).

8. The apparatus according to any of the preceding claims, further comprising a temperature sensor adapted for detecting the temperature at the first mold part (12) and/or at the second mold part (14).

9. A method for monitoring a mold for molding a shell hull, in composite material, of a boat, comprising the steps of:
a) providing an apparatus (10) according to any of the preceding claims;
b) producing, in a plurality of detection positions, by means of said sensor means (16), a plurality of signals representative of respective strains of the detection surface (24) of the first mold part (12) and/or of the second mold part (14), in directions substantially perpendicular to the detection surface (24).

10. A method according to claim 9, further comprising the steps of:
c) transmitting said plurality of signals to an electronic control unit (19);
d) processing said plurality of signals by means of said electronic control unit (19).

11. The method according to claim 10, further comprising the step of:
e) depending on the processing in step d), carrying out an action of repairing the first mold part (12) and/or the second mold part (14), the action of repairing comprising adding or removing material on one or more portions of the molding surface (24) of the first mold part (12) and/or of the second mold part (14).

12. A method for manufacturing a shell hull, in composite material, of a boat, comprising the steps of:
x1) carrying out monitoring according to the method of claims 9 to 11;
x2) arranging at least one layer of reinforcement material, or of fibrous material, inside said molding cavity (18); and
x3) following step x2), injecting a thermosetting resin inside said molding cavity (18) so as to fill said molding cavity (18) and/or to cover the molding surface (12a; 14a).

13. The method according to the claim 12, further comprising the step of:
x4) following step x3), having the layer of reinforcement material, or of fibrous material, and the thermosetting resin inside of the molding cavity (18) undergo a vacuum-bagged autoclave polymerization process, according to a specific pressure and temperature cycle.

14. The method according to claim 12 or claim 13, further comprising the step of:
x5) prior to step x2), arranging a layer of waxy material on the molding surface (12a; 14a) of the first mold part (12) and/or of the second mold part (14).

15. The method according to any of claims 12 to 14, **characterized in that** step b) of producing, in a plurality of detection positions, by means of said sensor means (16), a respective plurality of signals representative of the strains of the detection surface (24) of the first mold part (12) and/or of the second mold part (14), in directions substantially perpendicular to the detection surface (24), is carried out at least in part during at least one of step x2) and step x3).

## Patentansprüche

1. Vorrichtung (10) zum Formen eines Schalenrumpf aus Verbundmaterial, eines Bootes, die Vorrichtung (10) umfassend:
ein erstes Formteil (12) und ein zweites Formteil (14), wobei das erste Formteil (12) und das zweite Formteil (14) jeweils eine entsprechende Formfläche (12a, 14a) aufweisen,
wobei das erste Formteil (12) und das zweite Formteil (14) eingerichtet sind, gekoppelt zu werden, um gemeinsam einen konkaven Formhohlraum (18) zum Formen eines Schalenrumpfs eines Bootes aus Verbundmaterial zu definieren,
wobei der Formhohlraum (18) auf zwei gegenüberliegenden Seiten durch die jeweiligen Formflächen (12a, 14a) des ersten Formteils (12) und des zweiten Formteils (14) begrenzt wird und sich längs zwischen einem Heckende (20) und einem Bugende (22) erstreckt;
eine Mehrzahl von Sensormitteln (16), die in einer jeweiligen Mehrzahl von Erkennungspositionen auf einer Erkennungsfläche (24) angeordnet ist, die sich auf mindestens einem des ersten Formteils (12) und des zweiten Formteils (14) erstreckt, und direkt in Kontakt mit mindestens einem des ersten Formteils (12) und des zweiten Formteils (14) angeordnet ist, wobei die Erkennungsfläche (24) gegenüber der Formfläche (12a; 14a) des betreffenden Formteils (12; 14) angeordnet ist;
wobei die Sensormittel (16) der Mehrzahl von Sensormitteln (16) eingerichtet sind, eine Mehrzahl von Signalen zu erzeugen, die jeweilige Verformungen der Erkennungsfläche (24) in Richtungen darstellen, die sich im Wesentlichen senkrecht zu der Erkennungsfläche (24) in den jeweiligen Erkennungspositionen erstrecken,
**dadurch gekennzeichnet, dass**
- ein Feuchtigkeitssensor, der eingerichtet ist, die Feuchtigkeit an dem ersten Formteil und/oder an dem zweiten Formteil zu erkennen, .

2. Vorrichtung nach Anspruch 1, wobei die Sensormittel (16) in Reihen (26) verteilt sind, die quer zueinander beabstandet sind und sich längs zwischen dem Heckende (20) und dem Bugende (22) erstrecken.

3. Vorrichtung nach Anspruch 2, wobei Sensormittel (16) unterschiedlicher Reihen (26) in im Wesentlichen entsprechenden Längspositionen angeordnet sind.

4. Vorrichtung nach Anspruch 2 oder Anspruch 3, wobei die Sensormittel (16) jeder Reihe (26) elektrisch miteinander in Reihe geschaltet werden, um Energie zuzuführen und/oder Daten zu übertragen.

5. Vorrichtung nach einem der vorhergehenden Ansprüche, wobei die Sensormittel (16) auf der Erkennungsfläche (24) angeordnet sind, sodass:
mindestens ein Teil der Mehrzahl von Sensormitteln (16) entlang einer Kielmittellinie (28) des ersten Formteils (12) oder des zweiten Formteils (14) angeordnet ist; und
mindestens ein Teil der Mehrzahl von Sensormitteln (16) an einer Steuerbordseite in Bezug auf die Kielmittellinie (28) des ersten Formteils (12) oder des zweiten Formteils (14) angeordnet ist; und
mindestens ein Teil der Mehrzahl von Sensormitteln (16) an einer Backbordseite relativ zur Kielmittellinie (28) des ersten Formteils (12) oder des zweiten Formteils (14) angeordnet ist, wobei die Backbordseite gegenüber der Steuerbordseite des ersten Formteils (12) oder des zweiten Formteils (14) in Bezug auf die Kielmittellinie (28) angeordnet ist.

6. Vorrichtung nach einem der vorhergehenden Ansprüche, wobei die Sensormittel (16) auf der Erkennungsfläche (24) angeordnet sind, sodass:
mindestens ein Teil der Mehrzahl von Sensormitteln (16) in einem Mittelschiff-Abschnitt (30) des ersten Formteils (12) oder des zweiten Formteils (14) angeordnet ist; und
mindestens ein Teil der Mehrzahl von Sensormitteln (16) auf einer Heckseite (32) in Bezug auf den Mittelschiff-Abschnitt (30) des ersten Formteils (12) oder des zweiten Formteils (14) angeordnet ist; und
mindestens ein Teil der Mehrzahl von Sensormitteln (16) auf einer Bugseite (34) in Bezug auf den Mittelschiff-Abschnitt (30) des ersten Formteils (12) oder des zweiten Formteils (14) angeordnet ist, wobei die Heckseite (32) gegenüber der Bugseite (34) des ersten Formteils (12) oder des zweiten Formteils (14) in Bezug auf den Mittelschiff-Abschnitt (30) angeordnet ist.

7. Vorrichtung nach einem der vorhergehenden Ansprüche, wobei die Mehrzahl von Sensormitteln (16) in einer Mehrzahl jeweiliger Erkennungspositionen auf jeweiligen Erkennungsflächen (24) sowohl des ersten Formteils (12) als auch des zweiten Formteils (14) angeordnet ist, wobei die jeweilige Erkennungsfläche (24) des ersten Formteils (12) oder des zweiten Formteils (14) gegenüber der Formfläche (12a; 14a) des jeweiligen Formteils (12; 14) angeordnet ist.

8. Vorrichtung nach einem der vorhergehenden Ansprüche, ferner umfassend einen Temperatursensor, der eingerichtet ist, die Temperatur an dem ersten Formteil (12) und/oder an dem zweiten Formteil (14) zu erkennen.

9. Verfahren zum Überwachen einer Form zum Formen eines Schalenrumpfs, aus Verbundmaterial, eines Bootes, umfassend die folgenden Schritte:
a) Bereitstellen einer Vorrichtung (10) nach einem der vorhergehenden Ansprüche;
b) Erzeugen, in einer Mehrzahl von Erkennungspositionen, mittels der Sensormittel (16), einer Mehrzahl von Signalen, die jeweilige Verformungen der Erkennungsfläche (24) des ersten Formteils (12) und/oder des zweiten Formteils (14) in Richtungen darstellen, die sich im Wesentlichen senkrecht zu der Erkennungsfläche (24) erstrecken.

10. Verfahren nach Anspruch 9, ferner umfassend die folgenden Schritte:
c) Übertragen der Mehrzahl von Signalen an eine elektronische Steuereinheit (19);
d) Verarbeiten der Mehrzahl von Signalen mittels der elektronischen Steuereinheit (19).

11. Verfahren nach Anspruch 10, ferner umfassend den folgenden Schritt:
e) in Abhängigkeit von dem Verarbeiten in Schritt d), Durchführen einer Reparaturmaßnahme an dem ersten Formteil (12) und/oder an dem zweiten Formteil (14), wobei die Reparaturmaßnahme Hinzufügen oder Entfernen Material an einem oder mehreren Abschnitten der Formfläche (24) des ersten Formteils (12) und/oder des zweiten Formteils (14) umfasst.

12. Verfahren zum Herstellen eines Schalenrumpfs aus Verbundmaterial, eines Bootes, umfassend die folgenden Schritte:
x1) Durchführen der Überwachung nach dem Verfahren der Ansprüche 9 bis 11;
x2) Anordnen mindestens einer Schicht von Verstärkungsmaterial oder von Faserstoffmaterial innerhalb des Formhohlraums (18); und
x3) nach Schritt x2), Einspritzen eines duroplastischen Harzes in den Formhohlraum (18), um den Formhohlraum (18) auszufüllen den und/oder die Formfläche (12a; 14a) zu bedecken.

13. Verfahren nach Anspruch 12, ferner umfassend folgenden Schritt:
x4) nach Schritt x3) aufweisend die Schicht aus Verstärkungsmaterial oder Faserstoffmaterial und das duroplastische Harz innerhalb des Formhohlraums (18) Unterziehen einem Vakuum-Autoklav-Polymerisationsprozess nach einem spezifischen Druck- und Temperaturzyklus.

14. Verfahren nach Anspruch 12 oder 13, ferner umfassend den folgenden Schritt:
x5) vor Schritt x2), Anordnen einer Schicht aus wachshaltigem Material auf der Formfläche (12a; 14a) des ersten Formteils (12) und/oder des zweiten Formteils (14).

15. Verfahren nach einem der Ansprüche 12 bis 14, **dadurch gekennzeichnet, dass** Schritt b) von Erzeugen, in einer Mehrzahl von Erkennungspositionen, mittels der Sensormittel (16), einer jeweiligen Mehrzahl von Signalen, die Verformungen der Erkennungsfläche (24) des ersten Formteils (12) und/oder des zweiten Formteils (14) in Richtungen darstellen, die sich im Wesentlichen senkrecht zu der Erkennungsfläche (24) erstrecken, mindestens teilweise während mindestens einem des Schritts x2) und des Schritts x3) durchgeführt wird.

## Revendications

1. Appareil (10) de moulage d'une coque en matériau composite, d'un bateau, l'appareil (10) comprenant :
une première partie de moule (12) et une seconde partie de moule (14), la première partie de moule (12) et la seconde partie de moule (14) présentant chacune une surface de moulage respective (12a, 14a),
la première partie de moule (12) et la seconde partie de moule (14) étant adaptées pour être couplées afin de définir conjointement une cavité de moulage concave (18) pour mouler une coque de bateau en matériau composite,
la cavité de moulage (18) étant délimitée sur deux côtés opposés par les surfaces de moulage respectives (12a, 14a) desdites première partie de moule (12) et seconde partie de moule (14), et s'étendant longitudinalement entre une extrémité de poupe (20) et une extrémité de proue (22) ;
une pluralité de moyens capteurs (16), disposés dans une pluralité respective de positions de détection sur une surface de détection (24) qui s'étend sur au moins l'une desdites première partie de moule (12) et seconde partie de moule (14), et disposés directement en contact avec au moins l'une desdites première partie de moule (12) et seconde partie de moule (14), la surface de détection (24) étant disposée en regard de la surface de moulage (12a ; 14a) de ladite partie de moule (12 ; 14) ;
les moyens capteurs (16) de ladite pluralité de moyens capteurs (16) étant adaptés pour générer une pluralité de signaux représentatifs de déformations respectives de la surface de détection (24) dans des directions sensiblement perpendiculaires à la surface de détection (24) dans les positions de détection respectives,
**caractérisé en ce qu'**il comprend
- un capteur d'humidité adapté pour détecter l'humidité au niveau de la première partie de moule et/ou de la seconde partie de moule.

2. L'appareil selon la revendication 1, dans lequel les moyens capteurs (16) sont répartis en rangées (26) qui sont espacées transversalement et qui s'étendent longitudinalement entre l'extrémité de poupe (20) et l'extrémité de proue (22).

3. L'appareil selon la revendication 2, dans lequel les moyens capteurs (16) de différentes rangées (26) sont disposés dans des positions longitudinales sensiblement correspondantes.

4. L'appareil selon la revendication 2 ou la revendication 3, dans lequel les moyens capteurs (16) de chaque rangée (26) sont connectés électriquement en série entre eux pour alimenter en énergie et/ou pour transmettre des données.

5. L'appareil selon l'une quelconque des revendications précédentes, dans lequel les moyens capteurs (16) sont disposés sur la surface de détection (24) de telle sorte que :
au moins une partie de la pluralité de moyens capteurs (16) est disposée le long d'un axe de quille (28) de la première partie de moule (12) ou de la seconde partie de moule (14) ; et
au moins une partie de la pluralité de moyens capteurs (16) est disposée sur un côté tribord par rapport à l'axe de quille (28) de la première partie de moule (12) ou de la seconde partie de moule (14) ; et
au moins une partie de la pluralité de moyens capteurs (16) est disposée sur un côté bâbord par rapport à l'axe de quille (28) de la première partie de moule (12) ou de la seconde partie de moule (14), le côté bâbord étant disposé en regard du côté tribord de la première partie de moule (12) ou de la seconde partie de moule (14) par rapport à l'axe de quille (28).

6. L'appareil selon l'une quelconque des revendications précédentes, dans lequel les moyens capteurs (16) sont disposés sur la surface de détection (24) de telle sorte que :
au moins une partie de la pluralité de moyens capteurs (16) est disposée au niveau d'une section médiane (30) de la première partie de moule (12) ou de la seconde partie de moule (14) ; et
au moins une partie de la pluralité de moyens capteurs (16) est disposée sur un côté arrière (32) par rapport à la section médiane (30) de la première partie de moule (12) ou de la seconde partie de moule (14) ; et
au moins une partie de la pluralité de moyens capteurs (16) est disposée sur un côté avant (34) par rapport à la section médiane (30) de la première partie de moule (12) ou de la seconde partie de moule (14), le côté arrière (32) étant disposé à l'opposé du côté avant (34) de la première partie de moule (12) ou de la seconde partie de moule (14) par rapport à la section médiane (30).

7. L'appareil selon l'une quelconque des revendications précédentes, dans lequel la pluralité de moyens capteurs (16) est disposée dans une pluralité de positions de détection respectives sur des surfaces de détection respectives (24) desdites première partie de moule (12) et seconde partie de moule (14), la surface de détection respective (24) de la première partie de moule (12) ou de la seconde partie de moule (14) étant disposée en regard de la surface de moulage (12a ; 14a) de la partie de moule respective (12 ; 14).

8. L'appareil selon l'une quelconque des revendications précédentes, comprenant en outre un capteur de température adapté pour détecter la température au niveau de la première partie de moule (12) et/ou de la seconde partie de moule (14).

9. Procédé de surveillance d'un moule pour le moulage d'une coque, en matériau composite, d'un bateau, comprenant les étapes suivantes :
a) fournir un appareil (10) selon l'une quelconque des revendications précédentes ;
b) produire, en une pluralité de positions de détection, au moyen desdits moyens capteurs (16), une pluralité de signaux représentatifs de déformations respectives de la surface de détection (24) de la première partie de moule (12) et/ou de la seconde partie de moule (14), dans des directions sensiblement perpendiculaires à la surface de détection (24).

10. Procédé selon la revendication 9, comprenant en outre les étapes suivantes :
c) transmettre ladite pluralité de signaux à une unité de commande électronique (19) ;
d) traiter ladite pluralité de signaux au moyen de ladite unité de commande électronique (19).

11. Le procédé selon la revendication 10, comprenant en outre l'étape suivante :
e) en fonction du traitement de l'étape d), effectuer une action de réparation de la première partie de moule (12) et/ou de la seconde partie de moule (14), l'action de réparation comprenant l'ajout ou le retrait de matériau sur une ou plusieurs portions de la surface de moulage (24) de la première partie de moule (12) et/ou de la seconde partie de moule (14).

12. Procédé de fabrication d'une coque, en matériau composite, d'un bateau, comprenant les étapes suivantes :
x1) effectuer la surveillance selon le procédé des revendications 9 à 11 ;
x2) disposer au moins une couche de matériau de renfort ou de matériau fibreux à l'intérieur de ladite cavité de moulage (18) ; et
x3) à la suite de l'étape x2), injecter une résine thermodurcissable à l'intérieur de ladite cavité de moulage (18) de manière à remplir ladite cavité de moulage (18) et/ou à recouvrir la surface de moulage (12a ; 14a).

13. Le procédé selon la revendication 12, comprenant en outre l'étape suivante :
x4) à la suite de l'étape x3), soumettre la couche de matériau de renfort, ou de matériau fibreux, et la résine thermodurcissable à l'intérieur de la cavité de moulage (18) à un procédé de polymérisation en autoclave par ensachage sous vide, selon un cycle spécifique de pression et de température.

14. Le procédé selon la revendication 12 ou 13, comprenant en outre l'étape suivante :
x5) avant l'étape x2), disposer une couche de matériau cireux sur la surface de moulage (12a ; 14a) de la première partie de moule (12) et/ou de la seconde partie de moule (14).

15. Le procédé selon l'une quelconque des revendications 12 à 14, **caractérisé en ce que** l'étape b) de production, en une pluralité de positions de détection, au moyen desdits moyens capteurs (16), d'une pluralité respective de signaux représentatifs des déformations de la surface de détection (24) de la première partie de moule (12) et/ou de la seconde partie de moule (14), dans des directions sensiblement perpendiculaires à la surface de détection (24), est effectuée au moins en partie pendant au moins l'une de l'étape x2) et de l'étape x3).
